(19) Europäisches Patentamt / European Patent Office / Office européen des brevets

(11) **EP 4 502 919 A1**

(12) **EUROPEAN PATENT APPLICATION**
published in accordance with Art. 153(4) EPC

(43) Date of publication:
05.02.2025 Bulletin 2025/06

(51) International Patent Classification (IPC):
**G06T 5/00** (2024.01)

(21) Application number: 22954602.3

(22) Date of filing: 12.08.2022

(86) International application number:
PCT/CN2022/112138

(87) International publication number:
WO 2024/031643 (15.02.2024 Gazette 2024/07)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 10.08.2022 CN 202210953003

(71) Applicant: Horimed Technology Co., Ltd
Tianjin 300308 (CN)

(72) Inventors:
• ZHOU, Xiang
  Tianjin 300308 (CN)
• WU, Xining
  Tianjin 300308 (CN)
• ZHAO, Shiyong
  Tianjin 300308 (CN)

(74) Representative: Perronace, Andrea et al
Jacobacci & Partners S.p.A.
Via Tomacelli, 146
00186 Roma (IT)

(54) **PS-OCT VISIBILITY IMPROVEMENT METHOD AND SYSTEM BASED ON POLARIZATION MULTI-PARAMETER FUSION**

(57) Provided are a polarization-sensitive optical coherence tomography, PS-OCT, visibility enhancement method and system based on polarization multi-parameter fusion. The method includes: acquiring an original PS-OCT image, and performing preprocessing on the original PS-OCT image to acquire a contour of a to-be-tested sample; filtering, by using the contour of the to-be-tested sample, a QUV three-dimensional array constructed based on a Stokes matrix to obtain a polarization-state image; calculating, according to a polarization state obtained by calculation, a local optical axis image and a local phase retardation image by using a Poincaré sphere; and performing average gradient fusion or weighted fusion on a plurality of obtained images to obtain a final fused PS-OCT image. In the method and system, only one single input polarization state is required, and no mutually coherent polarization inputs are required, such that the requirement for the complexity of a system is relatively low.

FIG. 1

**Description**

TECHNICAL FIELD

The present disclosure relates to the field of optical coherence tomography (OCT) and, in particular, a polarization-sensitive optical coherence tomography (PS-OCT) visibility enhancement method and system based on polarization multi-parameter fusion.

BACKGROUND

OCT is widely acknowledged for its high-resolution imaging capability in intra-cavity applications. However, conventional OCT systems based on intensity imaging are inadequate in analyzing tissue properties; thus, it is difficult to distinguish between different biological tissues such as membrane structures and plaques during manual or artificial intelligence (AI)-assisted image analysis. Image expression results obtained from the existing intensity-based OCT used in clinical practice are vague. However, in addition to intensity information, light further carries other additional characteristics, and thus, analysis or quantitative measurement may be carried out on different tissues by using these additional characteristics carried by the light, thereby enhancing visibility. The PS-OCT is based on the following principle: For a variety of biological tissues or samples, polarization modulation of input light is implemented and the polarization state of the input light is changed, so the manner for additionally characterizing the visibility of biological tissues or samples can be obtained, and feature characteristics in addition to intensity information can be acquired.

The PS-OCT technology works by causing a change in the polarization state of the polarized light incident onto a sample tissue through propagation and reflection of the polarized light in the medium of the sample. The polarization characteristic information of the sample may be obtained by demodulating the polarization state of the back-reflected light, thereby achieving birefringence depth-resolved imaging of the tissue. Such a particular capability is especially crucial for samples or biological tissues. Proteins or biopolymers, such as collagen and actin, having an isotropic tissue structure within blood vessels are able to change the polarization state of incident light, and induce the incident light to form birefringence and generate measurable optical signals. By measuring the polarization state of back-reflected or back-scattered light from a sample or biological tissue, polarization information of the sample at depth resolution, such as a phase retardation and an optical axis orientation, can be obtained.

Most of the existing techniques for solving PS-OCT polarization information rely on phase retardation algorithms and polarization degree algorithms based on the Jones matrix or the Mueller matrix, but these conventional algorithms often result in low polarization visibility due to the significant diattenuation and depolarization effects in the system. Therefore, an analysis method based on multi-parameter fusion is proposed to solve the polarization characteristic information and enhance the visibility of polarized images.

SUMMARY

Therefore, the object of the present disclosure is to provide a PS-OCT visibility enhancement method and system based on polarization multi-parameter fusion to achieve color images of different tissue structures of a sample, thereby more intuitively helping doctors in diagnosis and reducing the difficulty in learning the existing intra-cavity imaging products.

To achieve the aforementioned object, the PS-OCT visibility enhancement method based on polarization multi-parameter fusion provided by the present disclosure includes steps S1 to S4.

In S1, an original PS-OCT image is acquired, and preprocessing is performed on the original PS-OCT image to acquire a contour of a to-be-tested sample.

In S2, a QUV three-dimensional array constructed based on a Stokes matrix is filtered by using the contour of the to-be-tested sample to obtain a polarization-state image.

In S3, according to a polarization state obtained by calculation, a local optical axis image and a local phase retardation image are calculated by using a Poincaré sphere.

In S4, average gradient fusion or weighted fusion is performed on the multiple images obtained in S2 and S3 to obtain a final fused PS-OCT image.

Further, preferably, preprocessing in S1 includes steps S101 to S104.

In S101, polarization-state H-channel data and polarization-state V-channel data in the original PS-OCT image are shaped by multiplying by a cosine taper window.

In S102, a Fourier transform is performed on the shaped data to obtain a Fourier domain matrix of an H channel and a Fourier domain matrix of a V channel.

In S103, an average value of the Fourier domain matrix of the H channel is taken as an original image of the H channel, an average value of the Fourier domain matrix of the V channel is taken as an original image of the V channel, and the original image of the H channel and the original image of the V channel are fused.

In S104, noise is filtered from the fused image of the original image of the H channel and the original image of the V channel according to a set threshold to obtain the contour of the to-be-tested sample.

Further, preferably, in S103, the original image of the H channel and the original image of the V channel are fused according to the following fusion formula:

$$Stru_{total} = 10 * log_{10}(pH_1^2 + pH_2^2 + pV_1^2 + pV_2^2)$$

In the above formula, $Stru_{total}$ denotes the fused image, $pH_1$ and $pH_2$ denote an upper image of the H channel and a lower image of the H channel, respectively, and $pV_1$ and $pV_2$ denote an upper image of the V channel and a lower image of the V channel, respectively.

Further, preferably, in S2, the polarization-state image is obtained in the following manner.

The Stokes matrix is normalized to form the QUV three-dimensional array, the QUV three-dimensional array is filtered by using the contour of the to-be-tested sample, a pixel outside the contour is set to 0, and the QUV three-dimensional array is depicted in a red, green, blue (RGB) manner to obtain a polarization-state color image of the contour of the to-be-tested sample.

Further, preferably, S3 in which the local optical axis image is calculated includes the following.

A spatial binormal vector $B_n$ of the plane of the PS-OCT image is extracted by using the Poincaré sphere; the second dimension of $B_n$ and the third dimension of $B_n$ are reversed to obtain a matrix of $x * y * 3$, where $x$ and $y$ denote the number of rows and the number of columns of image pixels, respectively; and the contour of the to-be-tested sample is used to filter the matrix to obtain the optical axis image.

Further, preferably, a local phase retardation is calculated according to the following formula:

$$\delta_n = \frac{1}{2} arccos \frac{N_{n-1} \cdot N_n}{|N_{n-1}| \cdot |N_n|}.$$

In the above formula, $\delta_n$ denotes the local phase retardation, $N_n$ denotes a normal vector in an $n^{th}$ osculating plane, and $N_{n-1}$ denotes a normal vector in an $(n-1)^{th}$ osculating plane.

Further, preferably, the local optical axis image is calculated according to the following formula:

$$A_n = R_{n-1}(-\delta_{n-1}; A_{n-1})R_{n-2}(-\delta_{n-2}; A_{n-2}) \cdots R_1(-\delta_1; A_1)B_n.$$

In the above formula, $A_n$ denotes a local optical axis, $B_n$ denotes an optical axis superimposed with birefringence effects of a tissue at different depths, $R_n$ denotes a 3*3 rotation matrix from an $(n-1)^{th}$ optical axis to an $n^{th}$ optical axis, $\delta_n$ denotes a phase retardation in the $n^{th}$ osculating plane, and $A_n(x)$, $A_n(y)$ and $A_n(z)$ denote three dimensions of the local optical axis $A_n$ of a three-dimensional array, respectively.

Further, preferably, the average gradient fusion in S4 is performed on the multiple images in the following manner.

The polarization-state image, the local optical axis image and the local phase retardation image are normalized; and normalized results of the three images are fused by using a gradient feature and an adjustable fusion weight coefficient.

Further, preferably, the weighted fusion in S4 is performed on the multiple images in the following manner.

In S401, the polarization-state image, the local optical axis image and the local phase retardation image are converted into three grayscale images, respectively.

In S402, grayscale feature fusion, shape feature fusion and texture feature fusion are separately performed on each of the three grayscale images to obtain three fused images corresponding to the grayscale feature fusion, the shape feature fusion and the texture feature fusion, the three fused images are fused to obtain the final fused image, and the final PS-OCT image is obtained according to the following fusion formula:

$$F = \sum_i d_i Fusimage_i, \text{ where } i = 1, 2, 3.$$

In the above formula, $d_i$ denotes a fusion coefficient, $d_1 = 0.4$, $d_2 = 0.2$, $d_3 = 0.4$, and $Fusimage_i$ denotes an image obtained after the grayscale feature fusion, an image obtained after the shape feature fusion and an image obtained after the texture feature fusion, respectively.

Further, preferably, the grayscale feature fusion in S402 includes the following process.

Grayscale feature values are extracted from each of the three grayscale images, where the grayscale feature values include a mean, a variance, an energy, a skewness, and a kurtosis.

Each of the three grayscale images is fused in a weighted fusion manner into five images based on the grayscale feature values, and fused images corresponding to the five grayscale feature values are calculated, respectively.

The fused images of the five grayscale feature values are fused into one grayscale fusion image.

Further, preferably, the shape feature fusion in S402 includes the following: shape feature extraction is performed on each of the three grayscale images, and a central moment of each of the three grayscale images is normalized; seven invariant-moment shape features are derived and taken as shape feature vectors to form a shape feature matrix, and shape fusion is performed by using the shape feature matrix to obtain a shape fusion image.

Further, preferably, the texture feature fusion in S402 includes the following: texture features are extracted from each of the three grayscale images, where the texture features include an energy, an entropy, a contrast, and a relevance; texture feature vectors are constructed by using the texture features, and fusion is performed on the three grayscale images according to four constructed texture feature vectors to form four texture feature images; and the four texture feature images are fused according to an equal weight to obtain a texture fusion image.

The present disclosure further provides a PS-OCT visibility enhancement system based on polarization multi-parameter fusion. The PS-OCT visibility enhancement system is used for implementing the PS-OCT visibility enhancement method based on polarization multi-parameter fusion described above and includes an image acquisition module, an image processing module and an image fusion module.

The image acquisition module is configured to acquire an original PS-OCT image and perform preprocessing on the original PS-OCT image to acquire a contour of a to-be-tested sample.

The image processing module is configured to filter, by using the contour of the to-be-tested sample, a QUV three-dimensional array constructed based on a Stokes matrix to obtain a polarization-state image and calculate, according to a polarization state obtained by calculation, a local optical axis image and a local phase retardation image by using a Poincaré sphere.

The image fusion module is configured to perform average gradient fusion or weighted fusion on the multiple images obtained above to obtain a final fused PS-OCT image.

The PS-OCT visibility enhancement method and system based on polarization multi-parameter fusion disclosed in the present application have the following advantages over the existing art.

1. In the PS-OCT visibility enhancement method and system based on polarization multi-parameter fusion provided by the present application, only one single input polarization state is required during the acquisition of PS-OCT, and no mutually coherent polarization inputs are required, such that the requirement for the complexity of the system is relatively low. The method and system have a wide application range, and can not only be used for PS-OCT based on an endoscope but can also be used for planar scanning PS-OCT based on a galvanometer.

2. The PS-OCT visibility enhancement method and system based on polarization multi-parameter fusion disclosed in the present application adopt various manners of solving polarization information and fuse the solved polarization information, thereby providing higher visibility compared to the currently existing art.

BRIEF DESCRIPTION OF DRAWINGS

FIG. 1 is a flowchart of a PS-OCT visibility enhancement method based on polarization multi-parameter fusion provided by the present disclosure.

FIG. 2 is a schematic diagram of a PS-OCT image interface in the PS-OCT visibility enhancement method based on polarization multi-parameter fusion provided by the present disclosure.

FIG. 3 is a schematic diagram of a Poincaré sphere in the PS-OCT visibility enhancement method based on polarization multi-parameter fusion provided by the present disclosure.

FIG. 4 is a schematic diagram of a local optical axis in the PS-OCT visibility enhancement method based on polarization multi-parameter fusion provided by the present disclosure.

FIG. 5 is a structure diagram of a PS-OCT visibility enhancement system based on polarization multi-parameter fusion provided by the present disclosure.

DETAILED DESCRIPTION

The present disclosure will be further described in detail through the drawings and embodiments.

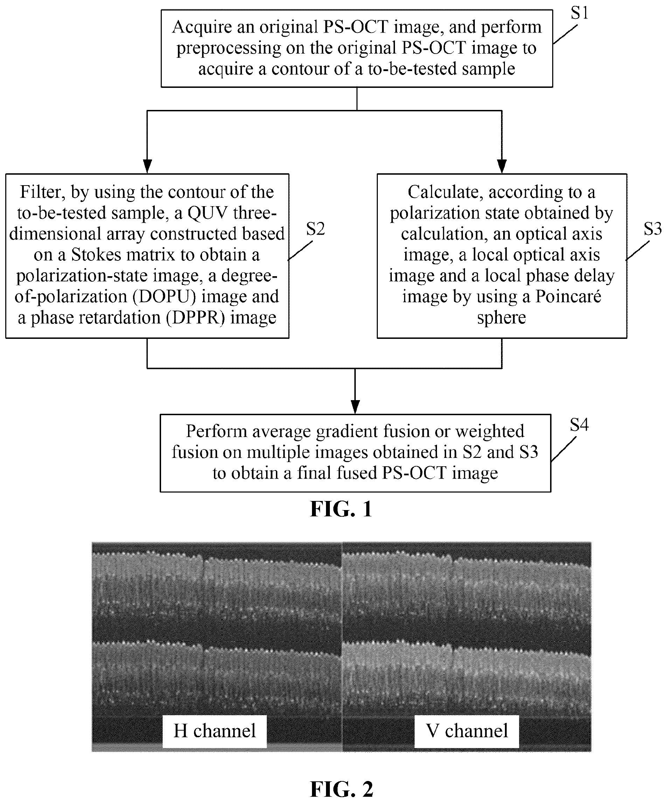

As shown in FIG. 1, the PS-OCT visibility enhancement method based on polarization multi-parameter fusion provided in an embodiment of the present disclosure in one aspect includes steps S1 to S4.

In S1, an original PS-OCT image is acquired, and preprocessing is performed on the original PS-OCT image to acquire a contour of a to-be-tested sample.

In S2, a QUV three-dimensional array constructed based on a Stokes matrix is filtered by using the contour of the to-be-tested sample to obtain a polarization-state image.

In S3, according to a polarization state obtained by calculation in S2, a local optical axis image and a local phase retardation image are calculated by using a Poincaré sphere.

In S4, average gradient fusion or weighted fusion is performed on the multiple images obtained in S2 and S3 to obtain a final fused PS-OCT image.

In an embodiment of the present application, the process of preprocessing includes steps S101 to S104.

In S101, polarization-state H-channel data and polarization-state V-channel data in the original PS-OCT image are shaped by multiplying by a cosine taper window.

In S102, a Fourier transform is performed on the shaped data to obtain a Fourier domain matrix of an H channel and a Fourier domain matrix of a V channel.

In S103, an average value of the Fourier domain matrix of the H channel is taken as an original image of the H channel, an average value of the Fourier domain matrix of the V channel is taken as an original image of the V channel, and the original image of the H channel and the original image of the V channel are fused.

In S104, noise is filtered from the fused image of the original image of the H channel and the original image of the V channel according to a set threshold to obtain the contour of the to-be-tested sample.

The original image of the H channel and the original image of the V channel are fused in S103 according to the following fusion formula:

$$Stru_{total} = 10 * log_{10}(pH_1^2 + pH_2^2 + pV_1^2 + pV_2^2)$$

In the above formula, $Stru_{total}$ denotes the fused image, $pH_1$ and $pH_2$ denote an upper image of the H channel and a lower image of the H channel, respectively, and $pV_1$ and $pV_2$ denote an upper image of the V channel and a lower image of the V channel, respectively.

In an implementation, the system collects and obtains orthogonal polarization-state A-scan data of two channels, H channel and V channel, shapes the data by subtracting a reference plane and multiplying by a cosine taper window, adds dispersion compensation, and then performs fast Fourier transform (FFT) to obtain a Fourier domain IMG_H of the H channel and a Fourier domain IMG_V of the V channel. The Fourier domain IMG_H and the Fourier domain IMG_V each are a complex matrix of $x * y * 4$. Therefore, when the Fourier domain IMG_H and the Fourier domain IMG_V are displayed as images, the absolute value of each of the Fourier domain IMG_H and the Fourier domain IMG_V is taken, and then the average of each of the Fourier domain IMG_H and the Fourier domain IMG_V is taken along a third dimension to obtain an original image of the H channel and an original image of the V channel. Due to the phase retardation caused by the birefringent effect of polarization, the H channel and the V channel each have an upper image and a lower image, and there are a total of four images, as shown in FIG. 2.

The structure diagram of the to-be-tested sample may be obtained by fusing the four images. The fusion formula is as follows:

$$Stru_{total} = 10 * log_{10}(pH_1^2 + pH_2^2 + pV_1^2 + pV_2^2)$$

In the above fusion formula, $pH_1$, $pH_2$, $pV_1$ and $pV_2$ are the upper and lower images of the H channel and the upper and lower images of the V channel, respectively. A threshold Thr for brightness is also set. A pixel with $Stru_{total}$ less than the threshold is considered as noise, thereby obtaining the contour Msk_Thr of the to-be-tested sample. In this manner, the data preprocessing is completed.

In S2, the polarization-state image is obtained in the following manner.

The Stokes matrix is normalized to form the QUV three-dimensional array, the QUV three-dimensional array is filtered by using the contour of the to-be-tested sample, pixels outside the contour are set to 0, and the QUV three-dimensional array is depicted in an RGB manner to obtain a polarization-state color image of the contour of the to-be-tested sample.

The polarization state is represented by using Stokes parameters: $S_0 = e^{2x} + e^{2y}$; $S_1 = e^{2x} - e^{2y}$; $S_2 = 2e^x e^y cos\backslash\theta$; $S_3 = 2e^x e^y sin\theta$. Obviously, $S_0^2 = S_1^2 + S_2^2 + S_3^2$. Only three variables in this equation are independent, and ideally (that is, in the case of lossless transmission), $S_0$ is a constant, so $S_1$, $S_2$ and $S_3$ represent a sphere. The sphere when $S_0$ is equal to 1 is called a Poincaré sphere, and points on the sphere are in one-to-one correspondence with the full polarization state of light. The process of calculating the polarization state is as follows:

Step one:

$$S_0 = |IMG\_H|^2 + |IMG\_V|^2$$

$$S_1 = |IMG\_H|^2 - |IMG\_V|^2$$

$$S_2 = 2 * |IMG\_H| * |IMG\_V| * cos\,(-\theta)$$

$$S_3 = 2 * |IMG\_H| * |IMG\_V| * sin\,(-\theta)$$

$$\theta = tan^{-1} \frac{imag(IMG_H * IMG_V{}^*)}{real(IMG_H * IMG_V{}^*)}$$

In the above formulas, $\theta$ is the phase difference between the H channel and the V channel, $IMG_V{}^*$ is the conjugate complex of *IMG_V, imag* denotes the imaginary part of the complex, and *real* denotes the real part of the complex.

Step two: Normalization

$Q = S_1/S_0$; $U = S_2/S_0$; $V = S_3/S_0$; where Q, U and V are the normalized coordinates.

Step three: Filtering. The manner of filtering may be, but is not limited to, median filtering, Gaussian filtering, mean filtering, imbox filtering, Wiener filtering, expansion, and corrosion.

Step four: Three-dimensional array construction. Q, U and V are constructed into a three-dimensional array Stokes of $x * y * 3$, the three-dimensional array Stokes vector is filtered by using the contour array Msk_Thr, the pixels outside the contour are set to 0, and the filtered three-dimensional array is depicted in an RGB manner to obtain a polarization-state color image of the contour of the to-be-tested sample.

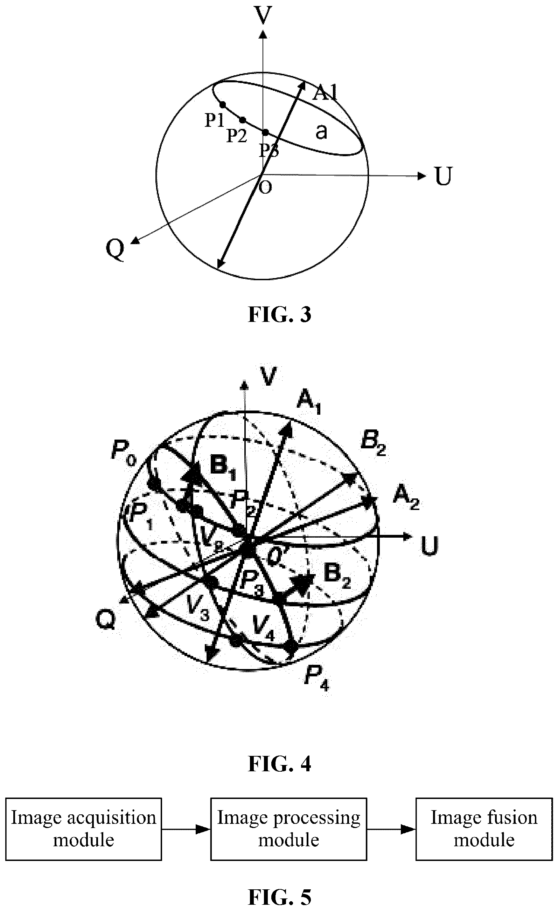

As shown in FIGS. 2 and 3, in S3, the local optical axis image is calculated as follows.

A spatial binormal vector Bn of the plane of the PS-OCT image is extracted by using the Poincaré sphere; a second dimension and a third dimension of Bn are reversed to obtain a matrix of $x * y * 3$, where *x* and *y* denote numbers of rows and columns of image pixels, respectively; then the contour of the to-be-tested sample is used to filter the matrix mentioned above to obtain an optical axis image.

Stokes may be represented on the Poincaré sphere by using the above polarization state result. In FIG. 3, $P_1$, $P_2$ and $P_3$ are three polarization states represented by Stokes parameters (S1, S2 and S3) on the sphere; the plane a is a plane fitted by points $P_1$, $P_2$ and $P_3$; A1 is the plane normal vector of plane a, that is, the optical axis. $P_1$ is an incident polarization state or an input polarization state. Because $P_1$ is incident on the surface of the sample and then is directly reflected by the surface as an output polarization state without changing the polarization information, $P_1$ is also an output polarization state. $P_2$ and $P_3$ each are obtained by rotating $P_1$ around the optical axis A1 of the sample by a certain angle. $P_1$, $P_2$ and $P_3$ are output polarization states received by a balanced detector.

$$T_n = \frac{P_{n+1} - P_n}{|P_{n+1} - P_n|}$$

$$B_n = \frac{T_{n-1} \times T_n}{|T_{n-1} \times T_n|}$$

$$N_n = B_n \times T_n$$

In the above formulas, $T_n$ denotes a unit tangent vector formed by $P_{n+1}$ and $P_n$, $T_{n-1}$ and $T_n$ form an osculating plane, $B_n$ denotes the spatial binormal vector of the plane for calculating the optical axis, and $N_n$ denotes the normal vector of the plane for calculating the phase retardation.

The method of calculating an optical axis based on $B_n$ is as follows:

The second dimension and the third dimension of Bn are reversed to obtain a matrix of $x * y * 3$ (where *x* and *y* denote the number of rows and the number of columns of image pixels, respectively), and Msk_Thr is used to filter the matrix mentioned above to obtain an optical axis image.

Further, a local phase retardation is calculated according to the following formula:

$$\delta_n = \frac{1}{2} arccos \frac{N_{n-1} \cdot N_n}{|N_{n-1}| \cdot |N_n|}.$$

In the above formula, $\delta_n$ denotes the local phase retardation, $N_n$ denotes the normal vector in an $n^{th}$ osculating plane, and $N_{n-1}$ denotes the normal vector in an $(n - 1)^{th}$ osculating plane. $\delta_n$ is converted into an RGB three-dimensional array, and then Msk_Thr is used to filter the array to obtain a local phase retardation (LocDP) image of the sample.

$\delta_n$ is converted into an RGB three-dimensional array, and Msk_Thr is used to filter the array to obtain a local phase delay (LocDP) image of the sample.

The optical axis represented by $B_n$ is the result superimposed with the birefringence effects of the tissue at different depths. In the deep depth of the tissue, the accumulated birefringence effects may lead to distortion of the result, so the birefringence effects accumulated with the depth need to be removed to restore the actual optical axis information of the depth of the tissue, that is, the local optical axis, which is shown as $A_2$ in the figure below.

The process of calculating the local optical axis $A_n$ is as follows:

$$A_n = R_{n-1}(-\delta_{n-1}; A_{n-1})R_{n-2}(-\delta_{n-2}; A_{n-2}) \cdots R_1(-\delta_1; A_1)B_n$$

$$A_1 = B_1$$

$$A_2 = R_1(-\delta_1; A_1)B_2$$

$$R_n = E + sin(-\delta_n) * \begin{pmatrix} 0 & -A_n(z) & A_n(y) \\ A_n(z) & 0 & -A_n(x) \\ -A_n(y) & A_n(x) & 0 \end{pmatrix} + (1 - cos(-\delta_n))$$

$$* \begin{pmatrix} 0 & -A_n(z) & A_n(y) \\ A_n(z) & 0 & -A_n(x) \\ -A_n(y) & A_n(x) & 0 \end{pmatrix}^2$$

In the above formulas, E is a third-order standard unit matrix, $R_n$ is a 3*3 rotation matrix from an $(n - 1)^{th}$ optical axis to an $n^{th}$ optical axis, $\delta_n$ is a phase retardation in the $n^{th}$ osculating plane, and $A_n(x)$, $A_n(y)$ and $A_n(z)$ are three dimensions of the local optical axis $A_n$ of a three-dimensional array, respectively. The local optical axis of the to-be-tested sample is obtained by filtering $A_n$ through the contour of the to-be-tested sample.

In S4, the average gradient fusion is performed on the multiple images in the following manner.

The polarization-state image, the local optical axis image and the local phase retardation image are normalized to obtain the normalized results, respectively.

The normalized results of the polarization-state image, the local optical axis image and the local phase retardation image are fused by using a gradient feature and an adjustable fusion weight coefficient.

The three images are normalized as follows, which is performed in the same range:

$$P' = \frac{P - min(P)}{max(P) - min(P)}$$

In the above formula, P denotes six images, including the polarization-state image, the local phase retardation image and the local optical axis image, all of which are normalized through the above formula.

The gradient feature vector G is calculated according to the following formula:

$$G \; = \; \frac{1}{(X-1) \times (Y-1)} \sum_{x=1}^{X-1} \sum_{y=1}^{Y-1} \sqrt{\Delta_x P^2(x,y) + \Delta_y P^2(x,y)}$$

In the above formula, M and N denote the width and height of the image, respectively, and $\Delta_x P(x,y)$ and $\Delta_y P(x,y)$ denote the difference of the image $P(x,y)$ calculated in the direction $x$ and the difference of the image $P(x, y)$ calculated in the direction $y$, respectively. $\Delta_x P(x,y)$ and $\Delta_y P(x,y)$ are calculated according to the following formulas:

$$\Delta_x P(x,y) = P(x+1,y) - P(x,y)$$

$$\Delta_y P(x,y) = P(x,y+1) - P(x,y)$$

The three normalized results are fused by using a gradient feature, and the fusion formula is as follows:

$$F_P = a_1 * G_{Stokes} * Stokes' + a_2 * G_{LocDP} * LocDP' + a_3 * G_{LocOptAxis} * LocOptAxis'$$

In the above formula, $a_1 + a_2 + a_3 = 1$, and $a_1$, $a_2$ and $a_3$ are fusion weight coefficients. By adopting different fusion weight coefficients, a clearer fused image may be obtained, which is the same as below. The image with more information has a larger weight. In specific experiments, $a_1 = 0.4$, $a_2 = 0.3$, and $a_3 = 0.3$.

In S4, the weighted fusion is performed on the multiple images in the following manner.

In S401, the polarization-state image, the local optical axis image and the local phase retardation image are converted into three grayscale images, respectively.

In S402, grayscale feature fusion, shape feature fusion and texture feature fusion are separately performed on each of the three grayscale images to obtain three fused images corresponding to the grayscale feature fusion, the shape feature fusion and the texture feature fusion, then the three fused images mentioned above are fused to obtain the final PS-OCT image according to the following fusion formula:

$$F = \sum_i d_i Fusimage_i,$$

where i = 1, 2, 3.

In the above formula, $d_i$ denotes a fusion coefficient, $d_1 = 0.4$, $d_2 = 0.2$, $d_3 = 0.4$, and $Fusimage_i$ denotes an image obtained after the grayscale feature fusion, an image obtained after the shape feature fusion and an image obtained after the texture feature fusion.

In S402, the grayscale feature fusion includes the following process.

Grayscale feature values are extracted from each of the three grayscale images, and the grayscale feature values include a mean, a variance, an energy, a skewness, and a kurtosis.

Each of the original three grayscale images is fused in a weighted fusion manner into five images based on the grayscale feature values, and five fused images corresponding to five grayscale feature values are calculated, respectively.

The five fused images of the five grayscale feature values are fused into one grayscale fusion image.

In S402, the shape feature fusion includes the following: shape feature extraction is performed on each of the three grayscale images, and the central moment of each of the three grayscale images is normalized; seven invariant-moment shape features are derived and taken as shape feature vectors to form a shape feature matrix, and shape fusion is performed by using the shape feature matrix to obtain a shape fusion image.

In S402, the texture feature fusion includes the following: texture features are extracted from each of the three grayscale images, and the texture features include an energy, an entropy, a contrast, and a relevance; texture feature vectors are constructed by using the texture features, and fusion is performed on the three grayscale images according to four constructed texture feature vectors to form four texture feature images; and the four texture feature images are fused according to an equal weight to obtain a texture fusion image.

1) Grayscale feature

a. Grayscale feature extraction

The grayscale features include five statistics: mean m, variance $v^2$, energy e, skewness s, and kurtosis u. The meanings and calculation formulas of these five statistics are given below.

First, the definition of a grayscale histogram is given below:

$$H(i) = \frac{d_i}{D}$$

i = 0, 1, 2, ..., T - 1; T denotes the grayscale level, $d_i$ denotes the number of pixels when the grayscale is i, and D denotes the total number of pixels in the image.

Mean m: The mean m represents the average value of the energy of the image and is calculated according to the following formula:

$$m = \sum_{i=0}^{T-1} iH(i)$$

Variance $v^2$: The variance $v^2$ represents the distribution of grayscale values of the image and is calculated according to the following formula:

$$v^2 = \sum_{i=0}^{T-1} (i-m)^2 H(i)$$

Energy e: The energy e represents the distribution of the grayscale of the image. The more uniform the distribution is, the larger the energy is. The energy e is calculated according to the following formula:

$$e = \sum_{i=0}^{T-1} H(i)^2$$

Skewness s: The skewness s represents the asymmetry in the histogram distribution of the image. The higher the skewness is, the more asymmetric the histogram distribution is. The skewness s is calculated according to the following formula:

$$s = \frac{1}{v^3} \sum_{i=0}^{T-1} (i-m)^3 H(i)$$

Kurtosis $u$: The kurtosis $u$ represents the grayscale distribution of the image around the mean of the image and is used to analyze whether the grayscale distribution concentrates around the mean. The smaller the kurtosis is, the more the distribution is concentrated around the mean. The kurtosis u is calculated according to the following formula:

$$u = \frac{1}{v^4} \sum_{i=0}^{T-1} (i-m)^4 H(i) - 3$$

b. Grayscale feature fusion

Each of the three grayscale images is fused in a weighted fusion manner into five feature value images based on the five grayscale features. The feature vector is represented by h, and h = (m, $v^2$, e, s, u). The feature vectors of the three grayscale images are represented as $h_1$, $h_2$, and $h_3$, respectively, and the weight of each feature vector is as follows:

$$w_i(j) = \frac{h_i(j)}{\sum_{i=0}^{6} h_i(j)}$$

In the above formula, i = 1, 2, 3, and j = 1, 2, 3, 4, 5.

Five fused images $F_j$ corresponding to the five grayscale feature values are calculated according to the following formula:

$$F_j = \sum_i w_i(j) X_i$$

In the above formula, $X_i$ ($i$ = 1, 2, 3) corresponds to six grayscale images, respectively, and $F_j$ (j = 1, 2, 3, 4, 5) represents the fused images of the five feature values, respectively.

The five fused images of the five grayscale feature values are fused into one grayscale feature image according to the following formula:

$$Fusimage_1 = \sum_j b_j F_j, \text{ where } j = 1, 2, 3, 4, 5.$$

$b_1 + b_2 + b_3 + b_4 + b_5 = 1$, and in experiments, $b_1$, $b_2$, $b_3$, $b_4$ and $b_5$ are 0.2, 0.2, 0.3, 0.3 and 0, respectively.

2) Shape feature

a. Shape feature extraction

For a discrete image $P(x,y)$, the (p + q)-order standard moment of the image is represented as follows:

$$m_{pq} = \sum_{x=1}^{X} \sum_{y=1}^{Y} x^p y^q P(x, y)$$

In the above formula, $X$ and $Y$ denote the width and height of the image, respectively, and $x$ and $y$ denote an $x^{th}$ pixel in the width direction and a $y^{th}$ pixel in the height direction, respectively, that is, the coordinates in the image.

The (p + q)-order central moment is represented as follows:

$$\psi_{pq} = \sum_{x=1}^{X} \sum_{y=1}^{Y} (x - \overline{x})^p (y - \overline{y})^q P(x, y)$$

In the above formula, $\overline{x}$ and $\overline{y}$ represent the center of gravity of the image and are calculated according to the following formulas:

$$\overline{x} = \frac{m_{10}}{m_{00}}$$

$$\overline{y} = \frac{m_{01}}{m_{00}}$$

The central moment is normalized according to the following formula:

$$\eta_{pq} = \frac{\psi_{pq}}{\psi_{00}^{(p+q+2)/2}}$$

Seven invariant-moment shape features are derived:

$$\Phi_1 = \eta_{20} + \eta_{02}$$

$$\Phi_2 = (\eta_{20} - \eta_{02})^2 + 4\eta_{11}{}^2$$

$$\Phi_3 = (\eta_{30} - 3\eta_{12})^2 + (3\eta_{21} - \eta_{03})^2$$

$$\Phi_4 = (\eta_{30} + \eta_{12})^2 + (\eta_{21} + \eta_{03})^2$$

$$\Phi_5 = (\eta_{30} - 3\eta_{12})(\eta_{30} + \eta_{12}) \times [(\eta_{30} + \eta_{12})^2 - 3(\eta_{21} + \eta_{03})^2] + (3\eta_{21} - \eta_{03})(\eta_{21} + \eta_{03}) \times [3(\eta_{30} + \eta_{12})^2 - (\eta_{21} + \eta_{03})^2]$$

$$\Phi_6 = (\eta_{20} - \eta_{02}) \times [(\eta_{30} + \eta_{12})^2 - (\eta_{21} + \eta_{03})^2] + 4\eta_{11}(\eta_{30} + \eta_{12})(\eta_{21} + \eta_{03})$$

$$\Phi_7 = (3\eta_{21} - \eta_{03})(\eta_{30} + \eta_{12}) \times [(\eta_{30} + \eta_{12})^2 - 3(\eta_{21} + \eta_{03})^2] + (3\eta_{12} - \eta_{30})(\eta_{21} + \eta_{03}) \times [3(\eta_{30} + \eta_{12})^2 - (\eta_{21} + \eta_{03})^2]$$

The value of $\eta$ with a numerical subscript in the above formulas denotes the normalized central moment value corresponding to the order p and the order $q$.

b. Shape feature fusion

The shape feature vector is represented as M, and M = $(\Phi_1, \Phi_2, \Phi_3, \Phi_4, \Phi_5, \Phi_6, \Phi_7)$.

The shape feature vectors of the three grayscale images are represented by $M_1$, $M_2$ and $M_3$, respectively, and $M_1$, $M_2$ and $M_3$ form a matrix which is represented as follows:

$$M_{ij} = \begin{matrix} M_1 \\ M_2 \\ M_3 \end{matrix} \quad , \text{ where } i = 1, 2, 3; \text{ and } j = 1, 2, 3, 4, 5, 6, 7.$$

The maximum value $m_j$ of each column (that is, the three images) is calculated, and the initial image corresponding to $m_j$ is $P_j$, so the shape feature fusion formula is obtained as follows:

$$Fusimage_2 = \sum_j \frac{1}{7} P_j$$

3) Texture feature

a. Texture feature extraction

Texture feature extraction is performed based on a grayscale co-occurrence matrix. The grayscale histogram can only directly describe the grayscale distribution of one pixel while the grayscale co-occurrence matrix can describe the combined grayscale distribution of two pixels. Given a certain point (x, y) in the image, the grayscale distribution of the point is ($gx, gy$). When (x, y) moves, a point (x + i, y + j) is obtained, and the corresponding grayscale distribution (gx', gy') is generated. The number of occurrences of grayscale values in the image is counted, and all the grayscale values are formed into a square matrix. The number of occurrences of a certain grayscale is normalized with respect to the total number of occurrences to obtain $P(gx,gy)$. $P(gx,gy)$ is the probability of occurrence, known as the grayscale co-occurrence matrix. The normalization formula for the grayscale co-occurrence matrix is as follows (where Z denotes the width and height of a square image, that is, the size of the image is Z × Z):

$$P(gx, gy) = \frac{P'(gx, gy)}{R}, R = \begin{cases} Z(Z-1), & (i,j) = (0,1) \text{ or } (1,0) \\ (Z-1)^2, & (i,j) = (1,1) \text{ or } (-1,1) \end{cases}$$

The texture features of the image cannot be comprehensively represented only through the grayscale co-occurrence matrix, so four scalars, that is, energy, entropy, contrast and relevance, are introduced to assist in representing the texture features of the image. The meanings and calculation methods of these four scalars are given below.

Energy $E$: The value of the energy $E$ not only describes the uniformity of grayscale distribution, but also indicates the texture coarseness to some extent. When values of all the parameters in the grayscale co-occurrence matrix $P(gx, gy)$ are equal, $E$ is relatively small. When the values of the parameters are largely different from each other, $E$ becomes larger. When the parameters in the grayscale co-occurrence matrix are close to the center, $E$ is relatively large, indicating that the texture of the image is uniform and changes regularly. The energy $E$ is calculated by squaring the parameters of the elements in the grayscale co-occurrence matrix $P(gx, gy)$ and then summing all the squared values, and the formula is as follows:

$$E = \sum_{gx} \sum_{gy} (P(gx, gy))^2$$

Entropy S: The entropy S is used to represent the complexity of the texture of the image. When the values of the co-occurrence matrix are relatively uniform, the entropy $S$ is relatively large. The entropy $S$ is calculated according to the following formula:

$$S = \sum_{gx} \sum_{gy} P(gx, gy) log_{10} P(gx, gy)$$

Contrast $I$: The contrast $I$ is used to represent the degree of clarity of the image. The smaller the contrast is, the shallower the grooves used to express the degree of concavity/convexity of the surface of an object are, and the lower the degree of clarity of the image is. The contrast $I$ is calculated according to the following formula:

$$I = \sum_{gx} \sum_{gy} (gx - gy)^2 P(gx, gy)$$

Relevance $R$: The relevance $R$ is used to represent the extent to which the parameters of the grayscale co-occurrence matrix $P(gx, gy)$ are the same in the horizontal and vertical directions. When the relevance of a certain direction is greater than the relevance of other directions, the texture features in this direction are obvious, so the relevance can be used for looking for the direction in which the texture is relatively strong. The relevance $R$ is calculated according to the following formula:

$$R = \frac{\sum_{gx} \sum_{gy} gxgyP(gx, gy) - \mu_x\mu_y}{\delta_x\delta_y}$$

In the above formula, $\mu_x$, $\mu_y$, $\delta_y$ and $\delta_x$ are intermediate variables and are calculated according to the following formulas:

$$\mu_x = \sum_{gx} gx \sum_{gy} P(gx, gy)$$

$$\mu_y = \sum_{gy} gy \sum_{gx} P(gx, gy)$$

$$\delta_x^2 = \sum_{gx} (gx - \mu_x)^2 \sum_{gy} P(gx, gy)$$

$$\delta_y^2 = \sum_{gy} (gy - \mu_y)^2 \sum_{gx} P(gx, gy)$$

b. Texture feature fusion

The energy $E$, entropy $S$, contrast $I$, and relevance $R$ are constructed into a texture feature vector $Y$, and $Y = (E, S, I, R)$. The feature vectors of the three grayscale images are $Y_1$, $Y_2$ and $Y_3$, respectively, and the weight of each of the feature vectors is calculated according to the following formula:

$$C_i(j) = \frac{Y_i(j)}{\sum_{i=1}^{3} Y_i(j)} \quad,$$

where i = 1, 2, 3; and j = 1, 2, 3, 4.

Fusion is separately performed on each texture feature of the three images to obtain four fused feature images, and the fusion formula is as follows:

$$FI_j = \sum_{i=1}^{6} C_i(j) P_i(x, y)$$

In the above formula, $P_i(x,y)$ denotes the images obtained from the three grayscale images, and $FI_j$ denotes the four fused feature images.

The four fused feature images are fused according to the following formula:

$$Fusimage_3 = \sum_j c_j FI_j, \text{ where } j = 1, 2, 3, 4.$$

The average fusion is adopted in experiments, that is, $c_1 = c_2 = c_3 = c_4 = 0.25$.

4) Feature weighted fusion

The grayscale fusion result, the shape fusion result and the texture fusion result are obtained according to the above grayscale, shape and texture features, respectively, and these three feature fusion results are fused to obtain the final fused image. The fusion formula is as follows:

$$F = \sum_i d_i Fusimage_i, \text{ where } i = 1, 2, 3.$$

In the above formula, $d_i$ denotes a fusion coefficient. In experiments, $d_1 = 0.4$, $d_2 = 0.2$, and $d_3 = 0.4$, that is,

$$F = 0.4 Fusimage_1 + 0.2 Fusimage_2 + 0.4 Fusimage_3$$

Finally, the image $F$ is then converted into an RGB image which is the final image processing result of the algorithm provided herein.

As shown in FIG. 5, the present disclosure further provides a PS-OCT visibility enhancement system based on polarization multi-parameter fusion. The PS-OCT visibility enhancement system based on polarization multi-parameter fusion is used for implementing the PS-OCT visibility enhancement method based on polarization multi-parameter fusion described above and includes an image acquisition module, an image processing module and an image fusion module.

The image acquisition module is configured to acquire an original PS-OCT image and perform preprocessing on the original PS-OCT image to acquire a contour of a to-be-tested sample.

The image processing module is configured to filter, by using the contour of the to-be-tested sample, a QUV three-dimensional array constructed based on a Stokes matrix to obtain a polarization-state image and calculate, according to a polarization state obtained by calculation, a local optical axis image and a local phase retardation image by using a Poincaré sphere.

The image fusion module is configured to perform average gradient fusion or weighted fusion on a plurality of images obtained above to obtain a final fused PS-OCT image.

Apparently, the above embodiments are only examples for the sake of clarity and are not a limitation of the embodiments. For those of ordinary skill in the art, alterations or modifications in other different forms can be made based on the preceding description. All the embodiments do not need to and cannot be exhaustively described herein. Obvious alterations or modifications derived therefrom remain within the scope of the present disclosure.

**Claims**

1. A polarization-sensitive optical coherence tomography, PS-OCT, visibility enhancement method based on polarization multi-parameter fusion, comprising:

   S1: acquiring an original PS-OCT image, and performing preprocessing on the original PS-OCT image to acquire a contour of a to-be-tested sample;
   S2: filtering, by using the contour of the to-be-tested sample, a QUV three-dimensional array constructed based on a Stokes matrix to obtain a polarization-state image;
   S3: calculating, according to a polarization state obtained by calculation, a local optical axis image and a local phase retardation image by using a Poincaré sphere; and
   S4: performing average gradient fusion or weighted fusion on a plurality of images obtained in S2 and S3 to obtain a final fused PS-OCT image.

2. The PS-OCT visibility enhancement method based on polarization multi-parameter fusion according to claim 1, wherein the preprocessing in S1 comprises:

   S101: shaping polarization-state H-channel data and polarization-state V-channel data in the original PS-OCT image by multiplying by a cosine taper window;
   S102: performing a Fourier transform on the shaped polarization-state H-channel data and the shaped polarization-state V-channel data to obtain a Fourier domain matrix of an H channel and a Fourier domain matrix of a V channel;
   S103: taking an average value of the Fourier domain matrix of the H channel as an original image of the H channel and an average value of the Fourier domain matrix of the V channel as an original image of the V channel, and fusing the original image of the H channel and the original image of the V channel; and
   S104: filtering noise from a fused image of the original image of the H channel and the original image of the V channel according to a set threshold to obtain the contour of the to-be-tested sample.

3. The PS-OCT visibility enhancement method based on polarization multi-parameter fusion according to claim 2, wherein in S103, the original image of the H channel and the original image of the V channel are fused according to the following fusion formula:

$$Stru_{total} = 10 * log_{10}(pH_1^2 + pH_2^2 + pV_1^2 + pV_2^2),$$

wherein $Stru_{total}$ denotes the fused image, $pH_1$ and $pH_2$ denote an upper image of the H channel and a lower image of the H channel, respectively, and $pV_1$ and $pV_2$ denote an upper image of the V channel and a lower image of the V channel, respectively.

4. The PS-OCT visibility enhancement method based on polarization multi-parameter fusion according to claim 1, wherein in S2, the polarization-state image is obtained in the following manner:
   normalizing the Stokes matrix to form the QUV three-dimensional array, filtering the QUV three-dimensional array by using the contour of the to-be-tested sample, setting pixels outside the contour to 0, and depicting the QUV three-dimensional array in a red, green, blue, RGB, manner to obtain a polarization-state color image of the contour of the to-be-tested sample.

5. The PS-OCT visibility enhancement method based on polarization multi-parameter fusion according to claim 1, wherein in S3, calculating the local optical axis image comprises:
extracting a spatial binormal vector $B_n$ of a plane of the PS-OCT image using the Poincaré sphere; reversing a second dimension and a third dimension of $B_n$ to obtain a matrix of $x * y * 3$, wherein $x$ and $y$ denote the number of rows of image pixels and the number of columns of image pixels, respectively; and using the contour of the to-be-tested sample to filter the matrix to obtain an optical axis image.

6. The PS-OCT visibility enhancement method based on polarization multi-parameter fusion according to claim 5, wherein a local phase retardation is calculated according to the following formula:

$$\delta_n = \frac{1}{2} arccos \frac{N_{n-1} \cdot N_n}{|N_{n-1}| \cdot |N_n|},$$

wherein $\delta_n$ denotes the local phase retardation, $N_n$ denotes a normal vector in an $n^{th}$ osculating plane, and $N_{n-1}$ denotes a normal vector in an $(n-1)^{th}$ osculating plane.

7. The PS-OCT visibility enhancement method based on polarization multi-parameter fusion according to claim 6, wherein the local optical axis image is calculated according to the following formula:

$$A_n = R_{n-1}(-\delta_{n-1}; A_{n-1})R_{n-2}(-\delta_{n-2}; A_{n-2}) \cdots R_1(-\delta_1; A_1)B_n,$$

wherein $A_n$ denotes a local optical axis, $B_n$ denotes an optical axis superimposed with birefringence effects of a tissue at different depths, $R_n$ denotes a 3*3 rotation matrix from an $(n-1)^{th}$ optical axis to an $n^{th}$ optical axis, $\delta_n$ denotes a phase retardation in the $n^{th}$ osculating plane, and $A_n(x)$, $A_n(y)$ and $A_n(z)$ denote three dimensions of the local optical axis $A_n$ of a three-dimensional array, respectively.

8. The PS-OCT visibility enhancement method based on polarization multi-parameter fusion according to claim 1, wherein in S4, the average gradient fusion is performed on the plurality of images in the following manner:
normalizing the polarization-state image, the local optical axis image and the local phase retardation image; and fusing normalized results of the polarization-state image, the local optical axis image and the local phase retardation image by using a gradient feature and an adjustable fusion weight coefficient.

9. The PS-OCT visibility enhancement method based on polarization multi-parameter fusion according to claim 1, wherein in S4, performing the weighted fusion on the plurality of images comprises:

S401: converting the polarization-state image, the local optical axis image and the local phase retardation image into three grayscale images, respectively; and
S402: separately performing grayscale feature fusion, shape feature fusion and texture feature fusion on each of the three grayscale images to obtain three fused images corresponding to the grayscale feature fusion, the shape feature fusion and the texture feature fusion, and fusing the three fused images to obtain the final fused image, wherein the final fused PS-OCT image is obtained according to the following fusion formula:

$$F = \sum_i d_i Fusimage_i, \text{ where } i = 1, 2, 3,$$

wherein $d_i$ denotes a fusion coefficient, $d_1 = 0.4$, $d_2 = 0.2$, $d_3 = 0.4$, and $Fusimage_i$ denotes an image obtained after the grayscale feature fusion, an image obtained after the shape feature fusion and an image obtained after the texture feature fusion, respectively.

10. The PS-OCT visibility enhancement method based on polarization multi-parameter fusion according to claim 9, wherein the grayscale feature fusion in S402 comprises:

extracting grayscale feature values from each of the three grayscale images, wherein the grayscale feature values comprise a mean, a variance, an energy, a skewness, and a kurtosis;

EP 4 502 919 A1

fusing, in a weighted fusion manner, each of the three grayscale images into five images based on the grayscale feature values, and calculating fused images corresponding to five grayscale feature values, respectively; and fusing the fused images corresponding to the five grayscale feature values into a grayscale fusion image.

11. The PS-OCT visibility enhancement method based on polarization multi-parameter fusion according to claim 9, wherein the shape feature fusion in S402 comprises: performing shape feature extraction on each of the three grayscale images, and normalizing a central moment of each of the three grayscale images; deriving seven invariant-moment shape features, taking the seven shape features as shape feature vectors to form a shape feature matrix, and performing shape fusion by using the shape feature matrix to obtain a shape fusion image.

12. The PS-OCT visibility enhancement method based on polarization multi-parameter fusion according to claim 9, wherein the texture feature fusion in S402 comprises: extracting texture features from each of the three grayscale images, wherein the texture features comprise an energy, an entropy, a contrast, and a relevance; constructing texture feature vectors by using the texture features, and performing fusion on the three grayscale images according to four constructed texture feature vectors to form four texture feature images; and fusing the four texture feature images according to an equal weight to obtain a texture fusion image.

13. A polarization-sensitive optical coherence tomography, PS-OCT, visibility enhancement system based on polarization multi-parameter fusion, used for implementing the PS-OCT visibility enhancement method based on polarization multi-parameter fusion according to any one of claims 1 to 12 and comprising an image acquisition module, an image processing module and an image fusion module;

wherein the image acquisition module is configured to acquire an original PS-OCT image and perform preprocessing on the original PS-OCT image to acquire a contour of a to-be-tested sample;
the image processing module is configured to filter, by using the contour of the to-be-tested sample, a QUV three-dimensional array constructed based on a Stokes matrix to obtain a polarization-state image and calculate, according to a polarization state obtained by calculation, a local optical axis image and a local phase retardation image by using a Poincaré sphere; and
the image fusion module is configured to perform average gradient fusion or weighted fusion on a plurality of images obtained to obtain a final fused PS-OCT image.

Acquire an original PS-OCT image, and perform preprocessing on the original PS-OCT image to acquire a contour of a to-be-tested sample — S1

Filter, by using the contour of the to-be-tested sample, a QUV three-dimensional array constructed based on a Stokes matrix to obtain a polarization-state image, a degree-of-polarization (DOPU) image and a phase retardation (DPPR) image — S2

Calculate, according to a polarization state obtained by calculation, an optical axis image, a local optical axis image and a local phase delay image by using a Poincaré sphere — S3

Perform average gradient fusion or weighted fusion on multiple images obtained in S2 and S3 to obtain a final fused PS-OCT image — S4

**FIG. 1**

H channel          V channel

**FIG. 2**

**FIG. 3**

**FIG. 4**

| Image acquisition module | → | Image processing module | → | Image fusion module |
|---|---|---|---|---|

**FIG. 5**

## INTERNATIONAL SEARCH REPORT

| International application No. |
| --- |
| **PCT/CN2022/112138** |

### A. CLASSIFICATION OF SUBJECT MATTER

G06T5/00(2006.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, WPABS, IEEE, CNABS: 多参量, 融合, 轮廓, 矩阵, 滤波, 偏振态, 庞加莱球, 光轴, 相位延迟, 梯度融合, PS-OCT, Stokes, multi-parametric, fusion, contour, matrix, filtering, polarization state, Poincare sphere, optical axis, phase delay, gradient fusion

### C. DOCUMENTS CONSIDERED TO BE RELEVANT

| Category* | Citation of document, with indication, where appropriate, of the relevant passages | Relevant to claim No. |
| --- | --- | --- |
| X | 李世维 等 (LI, Shiwei et al.). "基于多尺度边缘表示的偏振图像二次融合算法 (Secondary fusion algorithm for polarization images based on the multi-scale edge representation)" 激光与红外 (Laser & Infrared), Vol. 48, No. 1, 31 January 2018 (2018-01-31), pp. 113-118 | 1, 13 |
| X | CN 105139367 A (INSTITUTE OF OPTICS AND ELECTRONICS, CHINESE ACADEMY OF SCIENCES) 09 December 2015 (2015-12-09) claims 1-4, and description, paragraphs 30-69 | 1, 13 |
| A | CN 107909112 A (NORTH UNIVERSITY OF CHINA) 13 April 2018 (2018-04-13) entire document | 1-13 |
| A | CN 102124299 A (UNIVERSITY OF TOHOKU) 13 July 2011 (2011-07-13) entire document | 1-13 |
| A | CN 102749600 A (SUZHOU ANKE MEDICAL SYSTEM CO., LTD.) 24 October 2012 (2012-10-24) entire document | 1-13 |

☑ Further documents are listed in the continuation of Box C.     ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 April 2023** | **17 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/112138**

### C. DOCUMENTS CONSIDERED TO BE RELEVANT

| Category* | Citation of document, with indication, where appropriate, of the relevant passages | Relevant to claim No. |
|---|---|---|
| A | CN 109410160 A (HUNAN VISIONSPLEND PHOTOELECTRIC TECHNOLOGY CO., LTD.) 01 March 2019 (2019-03-01) entire document | 1-13 |
| A | CN 109919949 A (INSTITUTE OF AUTOMATION, CHINESE ACADEMY OF SCIENCES) 21 June 2019 (2019-06-21) entire document | 1-13 |
| A | CN 114129139 A (NANKAI UNIVERSITY) 04 March 2022 (2022-03-04) entire document | 1-13 |
| A | KR 20090021480 A (INDUSTRY-ACADEMIC COOPERATION FOUNDATION, YONSEI UNIVERSITY) 04 March 2009 (2009-03-04) entire document | 1-13 |
| A | US 2020396397 A1 (APPLE INC.) 17 December 2020 (2020-12-17) entire document | 1-13 |

Form PCT/ISA/210 (second sheet) (July 2022)

**INTERNATIONAL SEARCH REPORT**
Information on patent family members

International application No.

**PCT/CN2022/112138**

| Patent document cited in search report | | | Publication date (day/month/year) | Patent family member(s) | | | Publication date (day/month/year) |
|---|---|---|---|---|---|---|---|
| CN | 105139367 | A | 09 December 2015 | None | | | |
| CN | 107909112 | A | 13 April 2018 | CN | 107909112 | B | 18 August 2020 |
| CN | 102124299 | A | 13 July 2011 | WO | 2010021148 | A1 | 25 February 2010 |
| | | | | JPWO | 2010021148 | A1 | 26 January 2012 |
| | | | | JP | 5751470 | B2 | 22 July 2015 |
| | | | | US | 2011144505 | A1 | 16 June 2011 |
| | | | | CN | 102124299 | B | 26 February 2014 |
| CN | 102749600 | A | 24 October 2012 | CN | 102749600 | B | 24 December 2014 |
| CN | 109410160 | A | 01 March 2019 | CN | 109410160 | B | 22 September 2020 |
| CN | 109919949 | A | 21 June 2019 | US | 2021065371 | A1 | 04 March 2021 |
| | | | | US | 10964026 | B2 | 30 March 2021 |
| | | | | WO | 2020177189 | A1 | 10 September 2020 |
| | | | | CN | 109919949 | B | 28 April 2020 |
| CN | 114129139 | A | 04 March 2022 | CN | 217525092 | U | 04 October 2022 |
| KR | 20090021480 | A | 04 March 2009 | KR | 101426550 | B1 | 06 August 2014 |
| US | 2020396397 | A1 | 17 December 2020 | US | 11388355 | B2 | 12 July 2022 |
| | | | | GB | 201908516 | D0 | 31 July 2019 |

Form PCT/ISA/210 (patent family annex) (July 2022)